# FASCICULE DE BREVET EUROPEEN

(11) **EP 4 361 472 B1**
(45) Date de publication et mention de la délivrance du brevet: **10.09.2025**
(21) Numéro de dépôt: 22306610.1
(22) Date de dépôt: 24.10.2022
(51) Int. Cl.: F16J 3/04, B61D 17/12, B61C 17/00

(54) **DISPOSITIF D'ÉTANCHÉITÉ, ENSEMBLE ET VÉHICULE COMPRENANT UN TEL DISPOSITIF D'ÉTANCHÉITÉ ET PROCÉDÉ D'ASSEMBLAGE D'UN VÉHICULE COMPRENANT UN TEL DISPOSITIF D'ÉTANCHÉITÉ**
DICHTUNGSVORRICHTUNG, ANORDNUNG UND FAHRZEUG MIT SOLCH EINER DICHTUNGSVORRICHTUNG UND VERFAHREN ZUR MONTAGE EINES FAHRZEUGS MIT SOLCH EINER DICHTUNGSVORRICHTUNG
SEALING DEVICE, ASSEMBLY AND VEHICLE COMPRISING SUCH A SEALING DEVICE AND METHOD FOR ASSEMBLING A VEHICLE COMPRISING SUCH A SEALING DEVICE

(43) Date de publication de la demande: 01.05.2024
(73) Titulaire: ALSTOM Holdings, 93400 Saint-Ouen-sur-Seine (FR)
(72) Inventeur: TAINE, Antoine, 65600 SEMEAC (FR); DUFFAU, Laurent, 65300 LANNEMEZAN (FR); QUENTIN, Nicolas, 65420 IBOS (FR)
(74) Mandataire: Plasseraud IP

(56) Documents cités:
- WO-A1-2009/144060
- DE-A1- 102019 110 229
- ES-U- 177 258
- RU-C2- 2 529 453

## Description

La présente invention concerne un ensemble comprenant un dispositif d'étanchéité et un coffre, un véhicule comprenant un tel ensemble, ainsi qu'un procédé d'assemblage d'un véhicule comprenant un tel ensemble. Des systèmes d'étanchéité similaires sont décrits dans ES177258 U, RU2529453 C2, WO2009/144060 A1 et DE102019110229 A1.

Dans le domaine des véhicules, et notamment des véhicules ferroviaires, il est connu de fixer un coffre sur la caisse d'un véhicule, le coffre étant destiné à accueillir des équipements du véhicule. Il est également connu de ménager un passage entre le coffre et la caisse, de sorte à relier l'intérieur du coffre à l'intérieur de la caisse, afin de permettre un accès aux équipements disposés à l'intérieur du coffre, depuis l'intérieur de la caisse, par exemple pour des opérations de maintenance de ces équipements. Ce passage est formé en réalisant une première ouverture ménagée dans la caisse et une deuxième ouverture ménagée dans le coffre et disposée en regard de la première ouverture.

Il est également connu de disposer un soufflet d'étanchéité autour de ce passage, de sorte à isoler ce passage de l'extérieur, afin d'éviter les infiltrations d'eau à l'intérieur de la caisse et du coffre, pouvant provenir par exemple de précipitations ou encore d'opérations de nettoyage de l'extérieur du véhicule. Un tel soufflet présente une première extrémité, fixée de manière étanche à la caisse, autour de la première ouverture, et une deuxième extrémité, fixée de manière étanche au coffre, autour de la deuxième ouverture. Les fixations des extrémités du soufflet sont réalisées à l'aide de moyens de fixation qui sont généralement des brides, ou des colliers de serrage.

Cependant, l'utilisation de brides ou de colliers de serrage présente des risques importants pour l'opérateur réalisant la fixation des extrémités du soufflet. En effet, la mise en œuvre de telles fixations requiert l'accès aux première et deuxième ouvertures, avant que le coffre ne soit fixé sur la caisse du véhicule. Ainsi, un tel soufflet est généralement fixé alors que le coffre est en cours de levage, en étant maintenu au-dessus de la caisse et à distance de la caisse, de sorte à permettre à l'opérateur d'accéder aux première et deuxième ouvertures pour la mise en place des brides ou colliers de serrage. Après fixation du soufflet, le coffre est posé sur la caisse, puis fixé à la caisse.

La fixation du soufflet s'effectue donc nécessairement sous une charge en cours de levage, ce qui est particulièrement dangereux. En outre, l'espace laissé libre entre le coffre et la caisse est généralement exigu, ce qui rend complexe et chronophage la fixation des extrémités du soufflet.

C'est à ces inconvénients qu'entend plus particulièrement remédier l'invention, en proposant un dispositif d'étanchéité plus simple et plus sûr à installer.

À cet effet, l'invention concerne un ensemble tel que défini à la revendication 1.

Grâce à l'invention, le dispositif d'étanchéité permet de réaliser l'étanchéité d'un passage entre l'intérieur d'une caisse de véhicule et l'intérieur d'un coffre fixé sur cette caisse, sans devoir recourir à des moyens de fixation nécessitant une intervention sous une charge en cours de levage, et plus précisément sans nécessiter de fixation du dispositif d'étanchéité sur la caisse du véhicule, car le ressort de compression, en écartant les deux extrémités du soufflet, permet de plaquer automatiquement les extrémités du soufflet autour des ouvertures de la caisse et du coffre. L'assemblage d'un véhicule comprenant un tel dispositif d'étanchéité est ainsi sécurisé et facilité.

Des aspects avantageux, mais non obligatoires de l'invention, sont spécifiés aux revendications 2 à 6.

Selon un deuxième aspect, l'invention concerne également un véhicule, notamment un véhicule ferroviaire, tel que défini à la revendication 7.

Un aspect avantageux mais non obligatoire de ce véhicule est spécifié à la revendication 8.

Selon un troisième aspect, l'invention concerne également un procédé d'assemblage d'un véhicule, notamment ferroviaire, tel que défini à la revendication 9.

Ce véhicule et ce procédé d'assemblage induisent les mêmes avantages que ceux mentionnés ci-dessus au sujet de l'ensemble de l'invention.

L'invention sera mieux comprise et d'autres avantages de celle-ci apparaitront plus clairement à la lumière de la description qui va suivre d'un mode de réalisation d'un dispositif d'étanchéité, d'un coffre, d'un véhicule et d'un procédé d'assemblage d'un véhicule, conformes à son principe, donnée uniquement à titre d'exemple et faite en référence aux dessins annexés dans lesquels :
[Fig. 1] La figure 1 est une vue de côté d'un véhicule ferroviaire conforme à l'invention ;
[Fig. 2] La figure 2 est une coupe longitudinale à plus grande échelle du détail Il de la figure 1 ;
[Fig. 3] La figure 3 est une vue du détail III de la figure 2 ; et
[Fig. 4] La figure 4 est une coupe analogue à la figure 2 d'un coffre conforme à l'invention, le coffre appartenant au véhicule des figures 1 à 3 et comprenant un dispositif d'étanchéité conforme à l'invention.

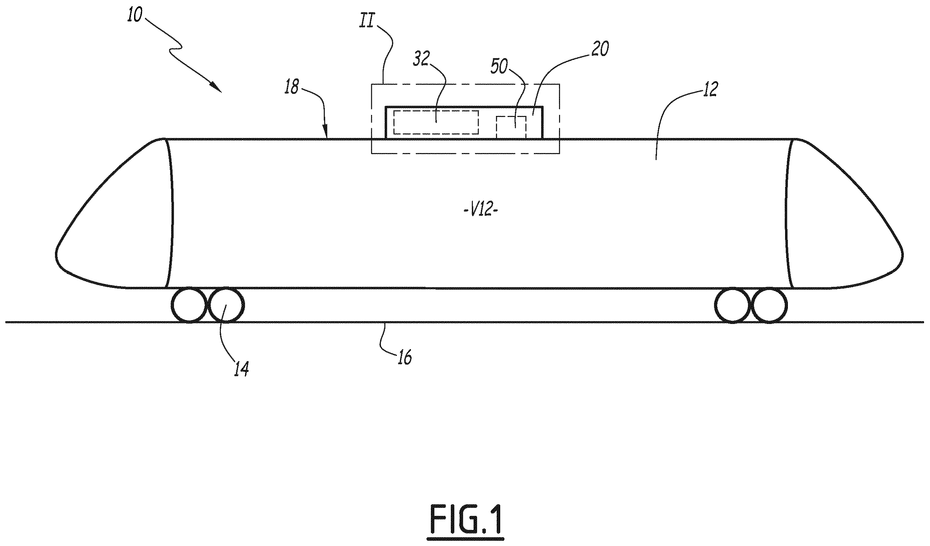

Un véhicule ferroviaire 10 est montré à la figure 1. Ce véhicule ferroviaire 10 comprend une caisse 12, délimitant un volume intérieur V12, et comprend des roues 14 permettant au véhicule d'évoluer sur des rails 16. La caisse 12 présente un toit 18. Dans l'exemple, le véhicule ferroviaire 10 est un train à une seule voiture.

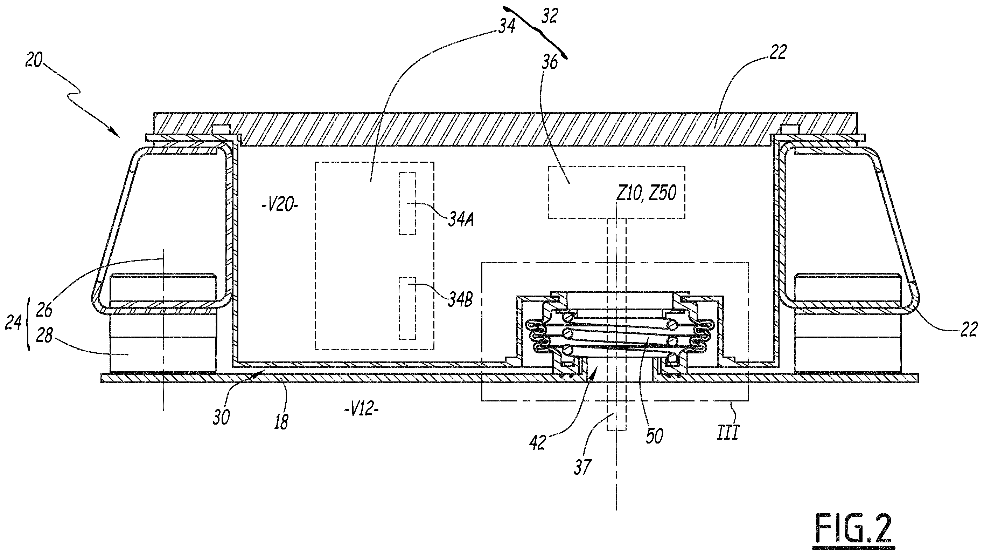

Comme mieux visible à la figure 2, le véhicule ferroviaire 10 comprend un coffre 20, qui est fixé sur la caisse 12. Une structure 22 du coffre 20 délimite un volume intérieur V20. Dans l'exemple, le coffre 20 est fixé sur le toit 18 de la caisse. Le coffre 20 est représenté de manière simplifiée à la figure 1.

Le coffre 20, et plus précisément la structure 22 du coffre, est fixé sur le toit 18 à l'aide de moyens de fixation 24. Dans l'exemple, les moyens de fixation 24 comprennent des vis 26, représentées de manière simplifiée par des traits d'axe, et des plots d'absorption 28, également connus sous l'appellation « silent blocs ». En pratique, les plots d'absorption 28 sont disposés entre la structure 22 et le toit 18, et sont compressés par le serrage des vis 26. Ainsi, la structure 22 du coffre 20 n'est pas directement en contact avec la caisse 12, c'est-à-dire qu'un interstice 30 est présent entre le coffre et la caisse, ce qui permet de réduire la transmission de vibrations et de bruit entre le coffre et la caisse. De plus, la fixation du coffre sur le toit à l'aide de plots d'absorption permet un mouvement relatif de faible amplitude du coffre par rapport à la caisse, ce qui contribue également à réduire les transmissions de vibrations et de bruit entre le coffre et la caisse.

Le coffre 20 comprend des équipements 32 qui participent au fonctionnement du véhicule 10.

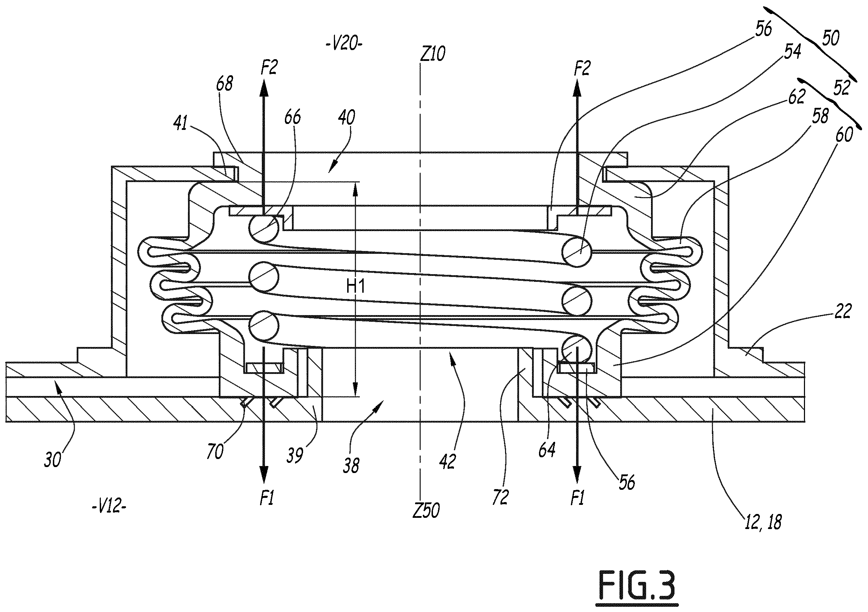

Par exemple, les équipements 32 comprennent un disjoncteur monophasé 34, dont une entrée 34A est reliée à une source d'énergie non représentée du véhicule 10, telle qu'un pantographe, et une sortie 34B est reliée à une chaîne de traction du véhicule, également non représentée, ainsi qu'un sectionneur 36, qui est un organe de sécurité permettant de relier à la terre l'entrée et la sortie du disjoncteur monophasé 34, notamment lors d'opérations de maintenance du véhicule. En pratique, le sectionneur 36 est un sectionneur mécanique à pilotage manuel, qui est actionnable à l'aide d'une manivelle 37 entre une position de repos et une position de sectionnement. Sur les figures, les équipements 32, le disjoncteur 34 et le sectionneur 36 sont représentés schématiquement. La manivelle 37 est représentée uniquement sur la figure 3, de manière simplifiée.

En variante, les équipements 32 sont par exemple des équipements de traction, ou tout autre équipement électrique comprenant un élément actionnable à l'aide de moyens manuels.

Le toit 18 de la caisse 12 comprend une première ouverture 38, délimitée par une bordure 39 du toit, et le coffre 20 comprend une deuxième ouverture 40, délimitée par une bordure 41 de la structure 22. Le coffre 20 est monté sur le toit 18 de sorte que la première ouverture 38 et la deuxième ouverture 40 sont en regard l'une de l'autre, formant entre elles un passage 42, qui relie le volume intérieur V12 de la caisse au volume intérieur V20 du coffre. En d'autres termes, le volume intérieur V20 du coffre 20 est accessible depuis le volume intérieur V12 de la caisse 12, par l'intermédiaire du passage 42. Dans l'exemple, les bordures 39 et 41 délimitent des ouvertures 38 et 40 de forme circulaires et le passage 42 est cylindrique à base circulaire, et s'étend selon un axe Z10, qui est ici vertical.

Le passage 42 est particulièrement utile pour faciliter l'accès aux équipements 32. Ainsi, la manœuvre du sectionneur 36 s'effectue depuis le volume intérieur V12 de la caisse 12, en insérant la manivelle 37 au travers du passage 42 depuis l'intérieur de la caisse jusqu'à atteindre le sectionneur, c'est-à-dire en insérant la manivelle 37 au travers de la première ouverture 38 puis au travers de la deuxième ouverture 40.

On note H1 la hauteur du passage 42, mesurée selon l'axe Z10. La hauteur H1 correspond ainsi à la distance séparant le toit 18 du coffre 20, au niveau des ouvertures 38 et 40.

Le véhicule 10 comprend un dispositif d'étanchéité 50, monté entre le coffre 20 et la caisse 12 de sorte à entourer le passage 42. Le dispositif d'étanchéité 50 permet d'assurer une étanchéité entre les volumes intérieurs V12 et V20 et l'extérieur du véhicule 10. En d'autres termes, le dispositif d'étanchéité 50 permet d'assurer une étanchéité entre le passage 42 et l'extérieur du véhicule 10, et plus précisément entre le passage 42 et l'interstice 30.

Comme mieux visible à la figure 3, le dispositif d'étanchéité 50 comprend un soufflet 52, un ressort de compression 54 et, avantageusement, deux rondelles 56.

Le soufflet 52 s'étend selon un axe Z50, qui est confondu avec l'axe Z10 en configuration assemblée du véhicule 10. Le soufflet 52 comprend une paroi en accordéon 58, qui s'étend selon l'axe Z50 et qui est étirable et comprimable selon l'axe Z50. La paroi 58 est pleine et étanche. Le soufflet 52 comprend une première extrémité 60 et une deuxième extrémité 62, reliées entre elles par la paroi en accordéon 58. Les deux extrémités 60 et 62 sont ouvertes. Dans l'exemple, le soufflet 52 présente une symétrie de révolution autour de l'axe Z50 et les deux extrémités 60 et 62 sont de forme circulaire.

Afin de permettre l'étirement et la compression de la paroi en accordéon 58, le soufflet 52 est réalisé dans un matériau souple, comme par exemple en silicone.

Le ressort de compression 54 s'étend selon l'axe Z50, en étant coaxial avec le soufflet 52, et présente une première extrémité 64 et une deuxième extrémité 66. De préférence, le ressort de compression 54 est réalisé en matériau métallique, par exemple en acier à ressort. Dans l'exemple, le ressort de compression 54 est un ressort hélicoïdal, réalisé à partir d'un fil à section ronde. En variante, le ressort de compression 54 est réalisé à partir d'un fil d'une autre section, comme par exemple rectangulaire ou elliptique. En variante, le ressort de compression est un ressort conique, un ressort en volute, ou tout autre type de ressort de compression.

De préférence, la raideur du ressort de compression 54 est comprise entre 1000 N/m et 10000 N/m, de préférence encore égale à 5000 N/m.

Le ressort de compression 54 est disposé dans le soufflet 52 pour que les extrémités 64 et 66 du ressort agissent sur les extrémités 60 et 62 du soufflet 52, de manière à écarter les deux extrémités du soufflet l'une de l'autre, selon l'axe Z50. En d'autres termes, la première extrémité 64 du ressort de compression 54 exerce un effort F1 sur la première extrémité 60 du soufflet, la deuxième extrémité 66 du ressort de compression exerce un effort F2 sur la deuxième extrémité 62 du soufflet, et les efforts F1 et F2 sont dirigés parallèlement à l'axe Z50 et opposés l'un à l'autre.

Une première rondelle 56 est disposée entre la première extrémité 60 du soufflet et la première extrémité 64 du ressort et la deuxième rondelle 56 est disposée entre la deuxième extrémité 62 du soufflet et la deuxième extrémité 66 du ressort. En d'autres termes, les rondelles 56 sont intercalées entre les extrémités 64 et 66 du ressort 54 et les extrémités 60 et 62 du soufflet 52.

De manière particulièrement avantageuse, les rondelles 56 permettent de protéger les extrémités 60 et 62 du soufflet 52, en évitant le contact direct de ces extrémités avec le ressort de compression 54, car un contact direct pourrait dégrader le soufflet, notamment lorsque le soufflet est réalisé dans un matériau plus souple que celui du ressort de compression, par exemple en silicone alors que le ressort de compression est réalisé en acier à ressorts. De plus les rondelles 56 permettent une transmission plus homogène des efforts F1 et F2 depuis les extrémités 64 et 66 du ressort de compression vers les extrémités 60 et 62 du soufflet. En effet, les rondelles 56 permettent, par exemple, de compenser des défauts de surface sur les extrémités du ressort de compression.

Le dispositif d'étanchéité 50 est fixé au coffre 20, et plus précisément à la structure 22 du coffre, de sorte que la deuxième extrémité 62 du soufflet 52 est en contact avec la structure 22 du coffre 20, en entourant la deuxième ouverture 40. Pour cela, le soufflet 52 comprend des moyens de fixation 68 permettant de fixer la deuxième extrémité 62 du soufflet à la bordure 41 de la structure 22.

Dans l'exemple, les moyens de fixation 68 sont une collerette périphérique, qui s'étend depuis la deuxième extrémité 62 du soufflet 52 au travers de la deuxième ouverture 40 jusqu'au volume intérieur V20 du coffre 20, et qui maintient la bordure entre la collerette 68 et la deuxième extrémité du soufflet. Le caractère souple du matériau constituant le soufflet 52 permet la mise en place de la collerette 68 au travers de la deuxième ouverture 40 par déformation élastique du soufflet, sans nécessiter le recours à des outils, ce qui facilite la fixation du dispositif d'étanchéité 50 sur le coffre 20.

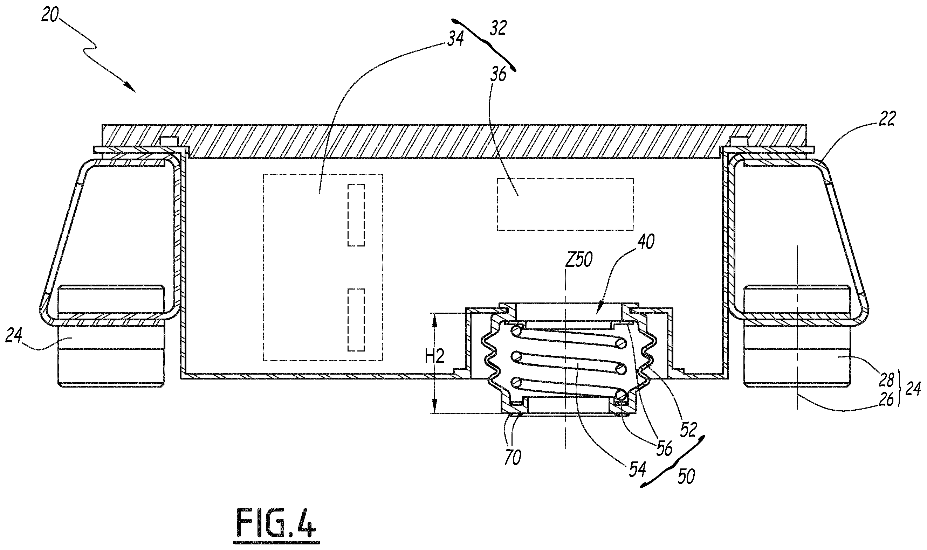

À la figure 4, le coffre 20 et le dispositif d'étanchéité 50 sont représentés seuls, sans la caisse 12 du véhicule 10. Le coffre 20 et le dispositif d'étanchéité 50 forment alors un ensemble destiné à être fixé sur la caisse d'un véhicule. Dans cette configuration, la première extrémité 60 du soufflet 52 est fixée à la bordure 41, la deuxième extrémité 62 du soufflet n'est en contact avec rien, et les efforts F1 et F2 exercés par le ressort de compression 54 éloignent alors la deuxième extrémité du soufflet de la première extrémité 60 du soufflet, détendant ainsi le ressort de compression, jusqu'à atteindre un état d'équilibre. Le dispositif d'étanchéité 50 est alors en configuration de repos. On note H2 la hauteur, mesurée selon l'axe Z50 dans cette configuration de repos et séparant les deux extrémités 60 et 62 du soufflet 52.

Lorsque le coffre 20 équipé du dispositif d'étanchéité 50 est fixé sur la caisse 12 du véhicule 10, comme sur les figures 1 à 3, alors la première extrémité 60 du soufflet 52 est en appui contre la caisse 12, plus précisément avec le toit 18, de sorte à entourer la première ouverture 38, et le dispositif d'étanchéité est en configuration de montage.

De plus, la hauteur H1 du passage 42 est inférieure à la hauteur H2 séparant les deux extrémités 60 et 62 du soufflet 52 lorsque le dispositif d'étanchéité 50 est en configuration de repos. Ainsi, en configuration de montage, et comme mieux visible sur la figure 3, le dispositif d'étanchéité est comprimé entre la caisse 12 et le coffre 20, jusqu'à ce que la hauteur séparant les deux extrémités 60 et 62 du soufflet soit égale à la hauteur H1 du passage 42. En d'autres termes, en configuration de montage du dispositif d'étanchéité 50, le ressort 54 est comprimé. Cette compression du ressort 54 conduit à augmenter les efforts exercés par le ressort sur les deux extrémités 60 et 62 du soufflet, par l'intermédiaire des rondelles 56, et conduit ainsi à plaquer la première extrémité 60 contre la caisse 12 et à plaquer la deuxième extrémité 62 contre le coffre 20.

En d'autres termes, les extrémités 60 et 62 du soufflet 52 ne sont pas simplement en contact avec la caisse 12 et le coffre 20, mais sont maintenues plaquées, c'est-à-dire compressées, contre la caisse et le coffre, par le ressort de compression 54. En pratique, en configuration de montage, les efforts F1 et F2 exercés par le ressort de compression sur les extrémités du soufflet sont compris entre 50 N et 500 N, de préférence égaux à 200 N.

Cette compression des extrémités du soufflet contre la caisse et le coffre est particulièrement avantageuse, car elle permet de renforcer l'étanchéité offerte par le soufflet 52, c'est-à-dire que cette compression diminue les risques d'infiltrations et de projections d'eau depuis l'interstice 30 vers le passage 42.

En outre, cette compression permet également de tolérer des défauts de planéité du toit 18 et/ou de la structure 22, ainsi que des états de surfaces dégradés de ces éléments, présentant par exemple des défauts tels que stries ou des arrachements de matière, sans diminuer l'étanchéité du dispositif d'étanchéité 50. En effet, la pression de contact générée par la mise en compression des extrémités du soufflet 52 par le ressort de compression 54, associée à la souplesse du soufflet, permet de compenser ces défauts.

Le dispositif d'étanchéité 50 tolère également des défauts de coplanarité entre la première ouverture 38 et la deuxième ouverture 40, car le ressort 54, lorsqu'il est comprimé, est en mesure de se déformer perpendiculairement à l'axe Z50, par exemple en se courbant, et cette déformation du ressort entraîne une déformation similaire du soufflet 52.

Par ailleurs, l'étanchéité du passage 42 est assurée quelle que soit la forme des ouvertures 38 et 40, tant que ces ouvertures sont entièrement entourées par le soufflet 52.

Grâce à ces multiples avantages, le véhicule 10 est moins onéreux à fabriquer, puisque les contraintes de fabrication de la caisse 12 et de la structure 22 du coffre 20 sont réduites.

Dans l'exemple, le ressort de compression 54 est disposé à l'intérieur du soufflet 52. Ainsi, le ressort est accessible depuis le passage 42, mais n'est pas accessible depuis l'extérieur du véhicule 10, et notamment depuis l'interstice 30. Cette disposition est particulièrement avantageuse, à la fois pour éviter que le ressort de compression ne soit en contact avec de l'eau, ce qui pourrait conduire à le dégrader, notamment lorsqu'il est réalisé en acier à ressort, et pour permettre une bonne compression de la paroi en accordéon 58 du ressort 54. En effet, la compression de la paroi en accordéon 58 s'effectue généralement d'une augmentation de la largeur du soufflet, radialement à l'axe Z50, alors que la largeur du ressort de compression est généralement constante. Par ailleurs, le fait que le ressort de compression soit disposé à l'intérieur du soufflet 52 permet au dispositif d'étanchéité 50 de former un ensemble unitaire facilement transportable, car le ressort est maintenu dans le soufflet par les extrémités 60 et 62 du soufflet, ainsi que par les rondelles 56. En pratique, le dispositif d'étanchéité 50 est assemblé en positionnant les rondelles 56 sur les deux extrémités 62 et 64 du ressort de compression 56, puis le soufflet 52 est mis en place autour du ressort et des rondelles, par déformation élastique.

Avantageusement, la première extrémité 60 du soufflet 52 comprend au moins une ailette d'étanchéité 70, dans l'exemple deux ailettes d'étanchéité 70, qui sont comprimées contre la caisse 12. Les ailettes d'étanchéité 70 permettent d'améliorer l'étanchéité entre la première extrémité du soufflet et la caisse, en réduisant la surface de contact entre la première extrémité du soufflet et la caisse, ce qui augmente la pression de contact au niveau de cette surface de contact.

A la figure 3, les ailettes d'étanchéité sont représentées dans leur configuration de repos, afin de faciliter leur représentation. En pratique, en configuration de montage du dispositif d'étanchéité 50, les ailettes d'étanchéité 70 sont déformées jusqu'à être comprimées entre la première extrémité 60 du soufflet 52 et la caisse 12.

Avantageusement, le toit 18 de la caisse 12 comprend un rebord 72, qui s'étend depuis la bordure 39 selon l'axe Z10, en s'éloignant du volume intérieur V12 de la caisse, c'est-à-dire en s'étendant dans le passage 42. Le rebord 72 s'étend ainsi à l'intérieur du dispositif d'étanchéité 50, et plus précisément à l'intérieur de la première extrémité 60 du soufflet 52. Le rebord 72 positionne ainsi la première extrémité du soufflet autour de la première ouverture 38, en empêchant un glissement de la première extrémité du soufflet radialement à l'axe Z10.

On décrit à présent un procédé d'assemblage du véhicule 10, visant à assembler le coffre 20 et le dispositif d'étanchéité 50 sur la caisse 12.

Dans une étape préalable, le dispositif d'étanchéité 50 est fixé au coffre 20, par l'intermédiaire des moyens de fixation 68.

Dans une première étape du procédé d'assemblage, le coffre 20 et le dispositif d'étanchéité 50 sont positionnés sur la caisse 12, afin que la deuxième ouverture 40 soit en regard de la première ouverture et afin que le dispositif d'étanchéité entoure le passage 42, c'est-à-dire que la première extrémité 60 du soufflet 52 soit en contact avec la caisse et que la deuxième extrémité 62 du soufflet soit en contact avec le coffre.

Au cours de la première étape du procédé d'assemblage, le soufflet 52 est en outre disposé de façon à ce que la première extrémité 60 du soufflet entoure le rebord 72 de la caisse 12. Le rebord 72 facilite ainsi le bon positionnement du soufflet 52.

Dans une deuxième étape du procédé d'assemblage, le coffre 20 est fixé sur la caisse 12, à l'aide des moyens de fixation 24. Au cours de cette étape, le ressort de compression 54 est compressé, jusqu'à ce que le dispositif d'étanchéité 50 passe de sa configuration de repos à sa configuration de montage. Dans l'exemple, cette compression du ressort 54 est forcée lorsque les vis 26 sont vissées et que les plots d'absorption 28 sont compressés. Par ailleurs, lorsque les axes Z10 et Z50 sont confondus et lorsque le coffre 20 est disposé au-dessus de la caisse 12, comme dans l'exemple, alors la compression du ressort 54 est aidée par le poids du coffre 20. On comprend qu'au cours de la deuxième étape, aucune intervention d'un opérateur sur le dispositif d'étanchéité 50 n'est nécessaire.

À l'issu de la deuxième étape, le dispositif d'étanchéité assure l'étanchéité entre le passage 42 et l'interstice 30, grâce au soufflet 52 dont les extrémités 60 et 62 sont plaquées contre la caisse 12 et contre le coffre 20, puisque le ressort de compression 54 écarte les deux extrémités du ressort l'une de l'autre et assure une pression de contact entre le soufflet et la caisse et le coffre.

On comprend que, dans l'exemple décrit ici, le dispositif d'étanchéité 50 n'est pas fixé à la caisse 12, et n'est maintenu en position contre la caisse que grâce à l'action du ressort de compression 54 qui plaque la première extrémité 60 du soufflet contre la caisse. Ainsi, grâce au ressort de compression 54 qui assure une pression de contact importante entre le soufflet 52 et la caisse 12, le soufflet n'a pas à être fixé à la caisse préalablement à l'assemblage du véhicule 10. Cette caractéristique va à l'encontre des préjugés du domaine, selon lesquels le soufflet serait nécessairement fixé à la caisse du véhicule, par exemple à l'aide d'une bride ou d'un collier de serrage. En outre, cette caractéristique est particulièrement avantageuse pour sécuriser le procédé d'assemblage du véhicule 10, car il n'est ainsi pas nécessaire de fixer le dispositif d'étanchéité 50 à la caisse 12. Or, une telle fixation devrait s'effectuer avant la fixation du coffre 20 à la caisse, mais après la mise en position du coffre au-dessus de la caisse, c'est-à-dire qu'une telle fixation devrait s'effectuer sous une charge en cours de levage, ce qui est particulièrement dangereux.

Par ailleurs, le fait que le dispositif d'étanchéité 50 ne soit pas fixé à la caisse 12 permet un mouvement relatif du dispositif d'étanchéité par rapport à la caisse, ce qui est avantageux pour diminuer les contraintes mécaniques s'exerçant sur le dispositif d'étanchéité, par exemple lorsqu'il est soumis à des vibrations importantes.

En variante non-représentée de l'invention, le dispositif d'étanchéité 50 n'est pas préalablement fixé au coffre 20, mais est préalablement fixé au toit 18 de la caisse 12. Ainsi, dans une telle variante, les moyens de fixation 68 ne permettent pas de fixer la deuxième extrémité 62 du soufflet 52 à la bordure 41 de la structure 22, mais permettent de fixer la première extrémité 60 du soufflet à la bordure 39 de la caisse 12. Dans une telle variante, le procédé d'assemblage du véhicule 10 est par ailleurs similaire au procédé préalablement décrit. De préférence, dans une telle variante, la structure 22 du coffre 20 comprend un rebord, similaire au rebord 72, qui facilite le positionnement du coffre 20 par rapport au dispositif d'étanchéité 50. De préférence, dans une telle variante, la deuxième extrémité 62 du soufflet 52 comprend des ailettes d'étanchéité, similaires aux ailettes d'étanchéité 70, qui sont comprimées contre le coffre 20. Comme dans le mode de réalisation représenté sur les figures, le procédé d'assemblage d'un véhicule 10 selon cette variante ne nécessite pas d'intervention sous une charge en cours de levage.

En variante non-représentée de l'invention, le dispositif d'étanchéité 50 ne comprend pas de moyens de fixation 68. Ainsi, dans une telle variante, le dispositif d'étanchéité n'est ni fixé au coffre 20, ni fixé à la caisse 12. Dans une telle variante, le procédé d'assemblage du véhicule 10 est similaire au procédé préalablement décrit, et au cours de la première étape, le coffre 20 et le dispositif d'étanchéité 50 sont positionnés sur la caisse 12 l'un après l'autre. En pratique, le dispositif d'étanchéité est d'abord positionné sur la caisse, puis le coffre est positionné sur le dispositif d'étanchéité et sur la caisse. De préférence, dans une telle variante, la première extrémité 60 du soufflet 52 comprend des ailettes d'étanchéité 70, qui sont comprimées contre la caisse 12, et la deuxième extrémité 62 du soufflet comprend des ailettes d'étanchéité similaires aux ailettes d'étanchéité 70, qui sont comprimées contre le coffre 20. De préférence, dans une telle variante, la caisse 12 et le coffre 20 comprennent chacun un rebord 72, de sorte à faciliter le positionnement du dispositif d'étanchéité 50 sur la caisse, puis le positionnement du coffre sur le dispositif d'étanchéité et sur la caisse. En outre, à l'issue de la deuxième étape du procédé d'assemblage, le dispositif d'assemblage 50 est maintenu d'une part contre la caisse 12 et d'autre part contre le coffre 20 grâce à l'action du ressort de compression 54, qui plaque les extrémités 60 et 62 du soufflet contre la caisse et contre le coffre. Comme dans le mode de réalisation représenté sur les figures, le procédé d'assemblage d'un véhicule 10 selon cette variante ne nécessite pas d'intervention sous une charge en cours de levage.

En variante non-représentée de l'invention, les moyens de fixation 68, qu'ils permettent de fixer le soufflet 52 au coffre 20 ou à la caisse 12, sont une bride, maintenue en place à l'aide de vis qui sont vissées dans la bordure 39 ou dans la bordure 41, ou sont un collier de serrage, qui est serré autour d'une saillie de forme complémentaire du coffre ou de la caisse.

En variante non-représentée de l'invention, le dispositif d'étanchéité 50 ne comprend pas de rondelles 56, et les extrémités 64 et 66 du ressort de compression 54 agissent directement sur les extrémités 60 et 62 du soufflet 52.

En variante non-représentée de l'invention, le ressort 54 n'est pas disposé à l'intérieur du soufflet 52, mais est disposé à l'extérieur du soufflet 52, ou alors est intégré au soufflet 52, par exemple par surmoulage, c'est-à-dire que le soufflet 52 et le ressort 54 forment ensemble un sous ensemble d'un seul tenant.

En variante non représentée, le véhicule ferroviaire 10 peut être composé de plusieurs voitures, avec chacune une caisse 12 équipée ou non d'un coffre. En variante non représentée, le véhicule 10 est un tramway, ou bien un véhicule routier tel qu'un autocar, un véhicule de transport aérien, voire encore un véhicule de transport maritime.

Toute caractéristique décrite pour un mode de réalisation ou une variante dans ce qui précède peut être mise en œuvre pour les autres modes de réalisation et variantes décrits précédemment, pour autant que techniquement faisable.

## Revendications

1. Ensemble (20, 50) destiné à être fixé sur une caisse (12) d'un véhicule (10), notamment d'un véhicule ferroviaire, la caisse de véhicule comprenant une première ouverture (38),
dans lequel l'ensemble comprend un coffre (20) et un dispositif d'étanchéité (50) fixé sur le coffre,
dans lequel le coffre comprend une deuxième ouverture (40) délimitée par une bordure (41), le coffre étant destiné à être positionné sur la caisse de sorte à ce que la première ouverture et la deuxième ouverture sont en regard l'une de l'autre et forment un passage (42) entre l'intérieur (V12) de la caisse et l'intérieur (V20) du coffre, le dispositif d'étanchéité étant configuré pour entourer le passage,
dans lequel le dispositif d'étanchéité (50) comprend un soufflet (52) qui présente une première extrémité (60), configurée pour être en contact avec la caisse (12) de sorte à entourer la première ouverture (38), et une deuxième extrémité (62), en contact avec le coffre (20) de sorte à entourer la deuxième ouverture (40),
dans lequel le dispositif d'étanchéité (50) comprend un ressort de compression (54) s'étendant selon un axe (Z50) et présentant deux extrémités (64, 66), chaque extrémité du ressort de compression agissant sur l'une des deux extrémités (60, 62) du soufflet (52) de manière à ce que le ressort de compression écarte les deux extrémités du soufflet l'une de l'autre, selon l'axe (Z50),
et dans lequel le soufflet (52) comprend des moyens de fixation (68), la deuxième extrémité (60) du soufflet étant fixée par les moyens de fixation (68) à la bordure (41) délimitant la deuxième ouverture (40).

2. Ensemble (20, 50) selon la revendication 1, dans lequel le dispositif d'étanchéité (50) comprend deux rondelles (56), chaque rondelle étant maintenue entre une extrémité (64, 66) du ressort de compression (54) et une extrémité (60, 62) du soufflet (52).

3. Ensemble (20, 50) selon l'une des revendications précédentes, dans lequel l'une au moins des deux extrémités (60, 62) du soufflet comprend au moins une ailette d'étanchéité (70) destinée à être comprimée contre la caisse (12) ou contre le coffre (20).

4. Ensemble (20, 50) selon l'une des revendications précédentes, dans lequel le ressort (54) est disposé à l'intérieur du soufflet (52).

5. Ensemble (20, 50) selon l'une des revendications précédentes, dans lequel le ressort (54) présente une raideur comprise entre 1 000 N/m et 10 000 N/m, de préférence une raideur égale à 5 000 N/m.

6. Ensemble (20, 50) selon l'une des revendications précédentes, dans lequel les moyens de fixation (68) sont une collerette périphérique, s'étendant au travers de la deuxième ouverture (40), de sorte à maintenir la bordure (41) entre la collerette et la deuxième extrémité (62) du soufflet (52).

7. Véhicule (10), notamment véhicule ferroviaire, comportant :
- une caisse (12) comprenant une première ouverture (38) ;
- un coffre (20) comprenant une deuxième ouverture (40), le coffre étant fixé sur la caisse et positionné sur la caisse de sorte que la première ouverture et la deuxième ouverture sont en regard l'une de l'autre et forment un passage (42) entre l'intérieur (V12) de la caisse et l'intérieur (V20) du coffre ; et
- un dispositif d'étanchéité (50) entourant le passage (42),
dans lequel le coffre (20) et le dispositif d'étanchéité (50) forment un ensemble (20, 50) conforme à l'une des revendications 1 à 6,
et dans lequel le coffre (20) est fixé sur la caisse (12) de sorte à comprimer le ressort de compression (54) entre le coffre et la caisse, le ressort de compression plaquant la première extrémité (60) du soufflet (52) contre la caisse et plaquant la deuxième extrémité (62) du soufflet contre le coffre.

8. Véhicule (10) selon la revendication 7, dans lequel le ressort de compression (54) exerce des efforts (F1, F2) sur chacune des deux extrémités (60, 62) du soufflet (52) compris entre 50 N et 500 N, de préférence égale à 200 N.

9. Procédé d'assemblage d'un véhicule (10), notamment ferroviaire, le véhicule comportant :
- une caisse (12) comprenant une première ouverture (38) ;
- un coffre (20) comprenant une deuxième ouverture (40) ; et
- un dispositif d'étanchéité (50),
dans lequel le coffre (20) et le dispositif d'étanchéité (50) forment un ensemble (20, 50) conforme à l'une des revendications 1 à 6,
dans lequel le procédé d'assemblage du véhicule (10) comporte au moins des étapes de :
- a) fixer le dispositif d'étanchéité (50) au coffre (20) par l'intermédiaire des moyens de fixation (68),
- b) positionnement du coffre (20) sur la caisse (12) et positionnement du dispositif d'étanchéité (50) entre le coffre et la caisse, de sorte à :
∘ disposer la deuxième ouverture (40) en regard de la première ouverture (38) ;
∘ entourer par le dispositif d'étanchéité (50) un passage (42) entre les deux ouvertures (38, 40) ; et
∘ mettre en contact la première extrémité (60) du soufflet (52) avec la caisse (12) et la deuxième extrémité (62) du soufflet avec le coffre (20), puis
- c) fixation du coffre (20) sur la caisse (12), entraînant le maintien en position du dispositif d'étanchéité (50) entre le coffre et la caisse par mise en compression de son ressort de compression (54).

## Patentansprüche

1. Anordnung (20, 50) zur Befestigung an einem Aufbau (12) eines Fahrzeugs (10), insbesondere eines Schienenfahrzeugs, wobei der Aufbau eine erste Öffnung (38) aufweist,
wobei die Anordnung einen Kasten (20) und eine am Kasten befestigte Dichtungsvorrichtung (50) umfasst,
wobei der Kasten eine zweite Öffnung (40) umfasst, die von einer Umrandung (41) begrenzt ist, wobei der Kasten dazu bestimmt ist, so auf dem Aufbau positioniert zu werden, dass die erste Öffnung und die zweite Öffnung einander gegenüberliegen und einen Durchgang (42) zwischen dem Innenraum (V12) des Aufbaus und dem Innenraum (V20) des Kastens bilden, wobei die Dichtungsvorrichtung dazu ausgebildet ist, den Durchgang zu umgeben, wobei die Dichtungsvorrichtung (50) einen Balg (52) umfasst, der ein erstes Ende (60) aufweist, das dazu ausgebildet ist, mit dem Aufbau (12) in Kontakt zu stehen, um die erste Öffnung (38) zu umgeben, und ein zweites Ende (62), das mit dem Kasten (20) in Kontakt steht, um die zweite Öffnung (40) zu umschließen,
wobei die Dichtungsvorrichtung (50) eine Druckfeder (54) umfasst, die sich entlang einer Achse (Z50) erstreckt und zwei Enden (64, 66) aufweist, wobei jedes Ende der Druckfeder auf eines der beiden Enden (60, 62) des Balgs (52) einwirkt, so dass die Druckfeder die beiden Enden des Balgs entlang der Achse (Z50) voneinander weg drückt,
und wobei der Balg (52) Befestigungsmittel (68) umfasst, wobei das zweite Ende (60) des Balgs durch die Befestigungsmittel (68) an dem die zweite Öffnung (40) begrenzenden Rand (41) befestigt ist.

2. Anordnung (20, 50) nach Anspruch 1, wobei die Dichtungsvorrichtung (50) zwei Scheiben (56) umfasst, wobei jede Scheibe zwischen einem Ende (64, 66) der Druckfeder (54) und einem Ende (60, 62) des Balgs (52) gehalten ist.

3. Anordnung (20, 50) nach einem der vorhergehenden Ansprüche, wobei wenigstens eines der beiden Enden (60, 62) des Balgs wenigstens einen Dichtungsflügel (70) aufweist, der dazu bestimmt ist, gegen den Aufbau (12) oder gegen den Kasten (20) gedrückt zu werden.

4. Anordnung (20, 50) nach einem der vorhergehenden Ansprüche, wobei die Feder (54) innerhalb des Balgs (52) angeordnet ist.

5. Anordnung (20, 50) nach einem der vorhergehenden Ansprüche, wobei die Feder (54) eine Steifigkeit zwischen 1000 N/m und 10 000 N/m, vorzugsweise eine Steifigkeit von 5 000 N/m aufweist.

6. Anordnung (20, 50) nach einem der vorhergehenden Ansprüche, wobei die Befestigungsmittel (68) ein umlaufender Flansch sind, der sich durch die zweite Öffnung (40) erstreckt, um den Rand (41) zwischen dem Flansch und dem zweiten Ende (62) des Balgs (52) zu halten.

7. Fahrzeug (10), insbesondere Schienenfahrzeug, umfassend:
- einen Aufbau (12) mit einer ersten Öffnung (38);
- einen Kasten (20) mit einer zweiten Öffnung (40), wobei der Kasten am Aufbau befestigt und so auf dem Aufbau positioniert ist, dass die erste Öffnung und die zweite Öffnung einander gegenüberliegen und einen Durchgang (42) zwischen dem Innenraum (V12) des Aufbaus und dem Innenraum (V20) des Kastens bilden; und
- eine den Durchgang (42) umgebende Dichtungsvorrichtung (50),
wobei der Kasten (20) und die Dichtungsvorrichtung (50) eine Anordnung (20, 50) nach einem der Ansprüche 1 bis 6 bilden,
und wobei der Kasten (20) so an dem Aufbau (12) befestigt ist, dass die Druckfeder (54) zwischen dem Kasten und dem Aufbau zusammengedrückt wird, wobei die Druckfeder das erste Ende (60) des Balgs (52) gegen den Aufbau drückt und das zweite Ende (62) des Balgs gegen den Kasten drückt.

8. Fahrzeug (10) nach Anspruch 7, wobei die Druckfeder (54) auf jedes der beiden Enden (60, 62) des Balgs (52) Kräfte (F1, F2) zwischen 50 N und 500 N, vorzugsweise gleich 200 N, ausübt.

9. Verfahren zum Zusammenbau eines Fahrzeugs (10), insbesondere eines Schienenfahrzeugs, wobei das Fahrzeug (30) umfasst:
- einen Aufbau (12) mit einer ersten Öffnung (38);
- einen Kasten (20) mit einer zweiten Öffnung (40); und
- eine Dichtungsvorrichtung (50),
wobei der Kasten (20) und die Dichtungsvorrichtung (50) eine Einheit (20, 50) nach einem der Ansprüche 1 bis 6 bilden,
wobei das Verfahren zum Zusammenbau des Fahrzeugs (10) wenigstens die folgenden Schritte umfasst:
a) Befestigen der Dichtungsvorrichtung (50) an dem Kasten (20) mittels der Befestigungsmittel (68),
b) Positionieren des Kastens (20) auf dem Aufbau (12) und Positionieren der Dichtungsvorrichtung (50) zwischen dem Kasten und dem Aufbau, so dass:
∘ die zweite Öffnung (40) gegenüber der ersten Öffnung (38) angeordnet ist;
∘ ein Durchgang (42) zwischen den beiden Öffnungen (38, 40) von der Dichtungsvorrichtung (50) umgeben ist; und
∘ das erste Ende (60) des Balgs (52) mit dem Aufbau (12) und das zweite Ende (62) des Balgs mit dem Kasten (20) in Kontakt gebracht wird, dann
c) Befestigen des Kastens (20) an dem Aufbau (12), wodurch die Dichtungsvorrichtung (50) durch Zusammendrücken ihrer Druckfeder (54) zwischen dem Kasten und dem Aufbau in ihrer Position gehalten wird.

## Claims

1. Assembly (20, 50) intended for being fastened to a body (12) of a vehicle (10), for example a railway vehicle, the vehicle body comprising a first opening (38),
wherein the assembly comprises a box (20) and a sealing system (50) fastened to the box,
wherein the box comprises a second opening (40) delimited by an edge (41), the box being intended for being positioned on the body in such a way that the first opening and the second opening face each other and form a passage (42) between the inside (V12) of the body and the inside (V20) of the box, the sealing system being configured for surrounding the passage,
wherein the sealing system (50) comprises a bellows (52) having a first end (60) configured for being in contact with the body (12) so as to surround the first opening (38), and a second end (62), in contact with the box so as to surround the second opening (40),
wherein the sealing system (50) comprises a compression spring (54) extending along an axis (Z50) and having two ends (64, 66), each of the two ends of the compression spring acting on one of the first end and second end (60, 62) of the bellows (52) so that the compression spring moves the first end and the second end of the bellows apart, along the axis (Z50),
and wherein the bellows (52) comprises fasteners (68), the second end (60) of the bellows being fastened by the fasteners (68) to the edge (41) delimiting the second opening (40).

2. Assembly (20, 50) according to claim 1, wherein the sealing system (50) comprises two washers (56), each washer being held between an end (64, 66) of the compression spring (54) and an end of the bellows (52).

3. Assembly (20, 50) according to one of the preceding claims, wherein at least one of the two ends (60, 62) of the bellows comprises at least one sealing rib (70) intended for being compressed against the body (12) or against the box (20).

4. Assembly (20, 50) according to one of the preceding claims, wherein the spring (54) is arranged inside the bellows (52).

5. Assembly (20, 50) according to one of the preceding claims, wherein the spring (54) has a stiffness comprised between 1,000 N/m and 10,000 N/m, preferentially a stiffness equal to 5,000 N/m.

6. Assembly (20, 50) according to one of the preceding claims, wherein the fasteners (68) are a peripheral collar flange, extending through the second opening (40), so as to hold the edge (41) between the collar flange and the second end (62) of the bellows (52).

7. Vehicle (10), comprising:
- a body (12) having a first opening (38);
- a box (20) having a second opening (40), the box (20) being fastened to the body and positioned on the body in such a way that the first opening and the second opening face each other and form a passage (42) between the inside (V12) of the body and the inside (V20) of the box; and
- a sealing system (50) surrounding the passage (42),
wherein the box (20) and the sealing system (50) form an assembly (20, 50) according one of claims 1 to 6,
and wherein the box (20) is fastened to the body (12) so as to compress the compression spring (54) between the box and the body, the compression spring pressing the first end (60) of the bellows (52) against the body and pressing the second end (52) of the bellows against the box.

8. Vehicle according to claim 7, wherein the compression spring (54) exerts forces (F1, F2) on each of the first end and second end (60, 62) of the bellows (52), comprised between 50 N and 500 N, preferentially equal to 200 N.

9. Method of assembly of a vehicle, in particular a railway vehicle, the vehicle comprising:
- a body (12) having a first opening (38) ;
- a box (20) having a second opening (40); and
- a sealing system (50),
wherein the box (20) and the sealing system (50) form an assembly according to one of claims 1 to 6,
wherein the method of assembly of the vehicle (10) comprises at least the steps of :
a) fastening the sealing system (50) to the box (20), using the fasteners (68),
b) positioning the box (20) on the body (12) and positioning the sealing system (50) between the box and the body, so as to:
∘ arrange the second opening (40) opposite the first opening (38);
∘ surrounding with the sealing system (50) a passage (42) between the two openings (38, 40); and
∘ putting the first end (60) of the bellows (52) in contact with the body (12) and the second end (62) of the bellows in contact with the box (20) , then
c) fastening the box (20) to the body (12), leading to the sealing system (50) to be held in position between the box and the body by compressing the compression spring (54) thereof.
